# EUROPÄISCHE PATENTANMELDUNG

(11) **EP 1 800 809 A1**
(43) Veröffentlichungstag der Anmeldung: **27.06.2007**
(21) Anmeldenummer: 06011997.1
(22) Anmeldetag: 10.06.2006
(51) Int. Cl.: B25J 19/00, F16D 65/14, F16D 66/02

(54) **Bremsvorrichtung für einen Roboterantrieb und Verfahren zum Erkennen eines Bremsenzustandes**

(30) Priorität: 19.12.2005 DE 102005061111
(71) Anmelder: ABB Technology AG, 8050 Zürich (CH)
(72) Erfinder: Jonsson, Ingvar, 72349 Västeras (SE)
(74) Vertreter: Miller, Toivo

(57) **Zusammenfassung**

Verfahren zum Erkennen eines Bremsenzustandes einer Bremsvorrichtung (10) Roboterantriebes mit einer Rahmenvorrichtung (20), die durch ein erstes bewegliches Rahmenelement (28) im Bedarfsfall Bremskräfte auf ein rotierendes Bauteil des Roboterantriebes aufbringt. Dadurch wird die Bremsvorrichtung (10) in wenigstens zwei Betriebszustände, insbesondere ein Zustand geschlossenen oder ein Zustand geöffnet versetzt. Dabei wird während des Überganges der Bremsvorrichtung (10) vom einen in den anderen Zustand wenigstens ein Messsignal aufgenommen, und durch einen Vergleich des wenigstens einen Messsignals mit zuvor festgelegten Referenzwerten ein Bremsenzustand ermittelt. Zudem betrifft die Erfindung eine Bremsvorrichtung auf der das vorstehende Verfahren durchführbar ist.

## Beschreibung

Die Erfindung betrifft ein Verfahren zum Erkennen eines Bremsenzustandes einer Bremsvorrichtung eines Roboterantriebes sowie eine Bremsvorrichtung für einen Roboterantrieb mit einer Antriebswelle, auf der ein Bremselement angeordnet ist, mit einer Rahmenvorrichtung, mit der im Bedarfsfalle Bremskräfte auf das Bremselement aufbringbar sind, wobei die Rahmenvorrichtung ein erstes Rahmenelement aufweist, das in eine erste und eine zweite Stellung verbringbar ist, wobei eine der Stellungen einen Betriebszustand "Bremse geöffnet" und die andere Stellung eines Betriebszustands "Bremse geschlossen" entspricht.

Derartige Bremsvorrichtungen für Roboterantriebe sind allgemein bekannt, beispielsweise in Form einer Scheibenbremsvorrichtung. Durch die Benutzung solcher Bremsen werden nach und nach die Bremsbelege verschlissen, sodass es nach einer bestimmten Benutzungszeit vorkommen kann, dass die Bremse eine abnehmende Bremsleistung zeigt oder vollständig versagt. Um dies zu vermeiden, werden bei Inspektionen beispielsweise die Dicke der Bremsbeläge gemessen oder durch regelmäßige optische Kontrollen kontrolliert.

Ausgehend von diesem Stand der Technik ist es Aufgabe der Erfindung ein Verfahren zum Erkennen eines Bremsenzustandes einer Bremsvorrichtung eines Roboterantriebes anzugeben, mit dem der Bremsenzustand besonders einfach feststellbar ist. Zudem ist es Aufgabe der Erfindung eine entsprechende Bremsvorrichtung anzugeben mit der das anzugebende Verfahren besonders einfach durchführbar ist.

Diese Aufgabe wird gelöst durch ein Verfahren zum Erkennen eines Bremsenzustandes mit den im Patentanspruch 1 angegebenen Merkmalen sowie mit einer Bremsvorrichtung für einen Roboterantrieb mit den im Patentanspruch 15 angegebenen Merkmalen.

Erfindungsgemäß hat das Verfahren zum Erkennen eines Bremsenzustandes einer Bremsvorrichtung eines Roboterantriebes eine Rahmenvorrichtung, die durch ein erstes bewegliches Rahmenelement im Bedarfsfall Bremskräfte auf ein rotierendes Bauteil des Roboterantriebs aufbringt. Dabei wird die Bremsvorrichtung in wenigstens zwei Betriebszustände der Bremse, insbesondere in einen Zustand geöffnet oder in einen Zustand geschlossen, versetzt, wobei während des Übergangs der Bremsvorrichtung von dem ersten in dem zweiten Betriebszustand ein Messsignal aufgenommen wird. Schließlich wird durch einen Vergleich des Messsignals mit zuvor festgelegten Referenzwerten ein Bremsenzustand der Bremse ermittelt.

Auf diese Weise ist vorteilhafterweise erreicht, dass beim einfachen Verändern von einen in einen zweiten Betriebszustand bereits der Bremsenzustand der Bremsvorrichtung festgestellt wird.

Vorteilhaft ist es auch, dass als die erste Stellung der geschlossenen Zustand der Bremse und als die zweite Stellung der geöffnet Zustand der Bremse gewählt wird.

Eine vorteilhafte Ausgestaltung des erfindungsgemäßen Verfahrens sieht vor, dass das erste Rahmenelement mit wenigstens einer elektromagnetisch wirkenden Haltevorrichtung von der ersten in die zweite Stellung verbracht wird.

Dies ist beispielsweise ein angesteuerter Elektromagnet, der das Rahmenelement im Aktivierungsfalle an sich heranzieht.

Besonders vorteilhaft ist es zudem, dass bei der vorgenannten Ausgestaltung die Stromstärke oder der Stromstärkenverlauf der elektromagnetisch wirkenden Haltervorrichtung die Feldstärke des Elektromagneten bestimmt. Dieses Signal wird dazu herangezogen, den Abstand eines ersten Rahmenelements von der ersten Stellung zur zweiten Stellung zu bestimmen. Es wird nämlich der physikalische Effekt ausgenutzt, dass mit steigendem Abstand des ersten Rahmenelements zum Elektromagneten eine größere Feldstärke und damit eine höhere Stromstärke im Elektromagneten benötigt wird um das Rahmenelement von seiner ersten in die zweite Stellung zu bewegen.

Die Aufgabe wird zudem gelöst durch eine Bremsvorrichtung für einen Roboterantrieb mit den im Patentanspruch 15 genannten Merkmalen.

Demgemäß kennzeichnet sich eine Bremsvorrichtung der eingangs genannte Art dadurch, dass mit einer Messvorrichtung wenigstens ein Messsignal für den Abstand des ersten Rahmenelements zwischen seinen Stellungen aufnehmbar ist, und dass durch eine Auswertevorrichtung ein Bremsenzustand durch Vergleich des Messsignals mit einem Referenzwert ermittelt ist.

In einer einfachen Ausgestaltung der erfindungsgemäßen Bremsvorrichtung ist die Messvorrichtung beispielsweise ein Abstandsmesser, der als separates Bauteil in der Bremse den erforderlichen Abstand zwischen der ersten und der zweiten Stellung des ersten Rahmenelements mit einer direkten Messung misst. Dieser Abstand ist nämlich abhängig vom Zustand der Bremse, insbesondere von der Schichtdicke der Bremsbelege, die entweder auf dem rotierenden Teil der Bremsvorrichtung, beispielsweise als Bremsscheibe aufgebracht sind und/oder auf dem ersten Rahmenelement und/oder einem Teil der Rahmenvorrichtung.

Besonders vorteilhaft ist es, wenn das erste Rahmenelement durch eine elektromagnetisch wirkende Haltevorrichtung von seiner ersten in die zweite Stellung verbringbar ist.

In diesen Fall ist die Haltevorrichtung als Messvorrichtung mit verwendbar, nämlich indem als Messsignal die notwendige Stromstärke oder der Stromstärkenverlauf zum Verbringen des ersten Rahmenelementes herangezogen ist. Auf diese Weise ist eine so genannte indirekte Messung des Abstands realisiert.

Auf diese Weise sind die erfindungsgemäßen Vorteile in besonders einfacher Weise technisch realisiert.

Weitere vorteilhafte Ausgestaltungen der erfindungsgemäßen Bremsvorrichtung sowie des erfindungsgemäßen Verfahrens sind den weiteren abhängigen Ansprüchen zu entnehmen.

Anhand der in der Zeichnungen dargestellten Ausführungsbeispiele sollen die Erfindung, vorteilhafter Ausgestaltungen und Verbesserungen der Erfindung sowie deren besondere Vorteile näher erläutert und beschrieben werden.

Es zeigt:
- Figur 1: eine schematische Darstellung einer Bremsvorrichtung und
- Figur 2: eine Graphik mit Messwertbeispielen.

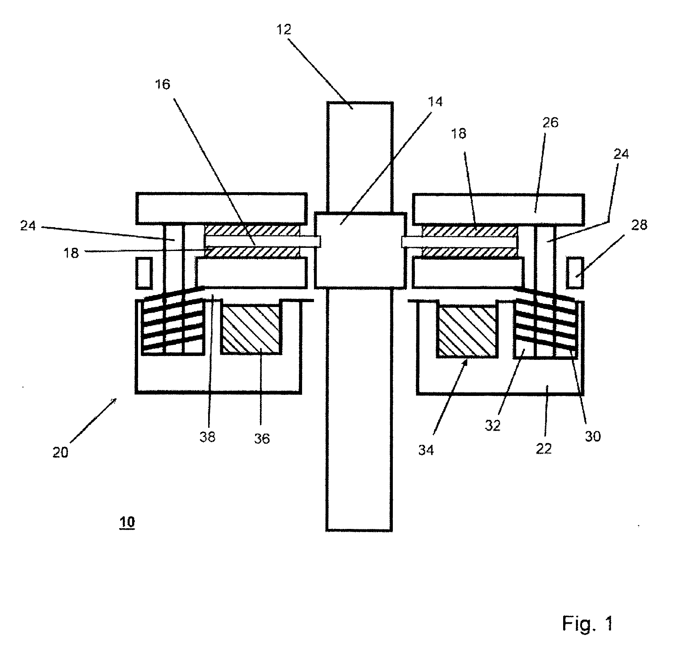

Figur 1 zeigt eine erfindungsgemäße Bremsvorrichtung 10 in einer schematischen Darstellung, als Schnittansicht, wobei die in technischen Zeichnungen üblichen Schraffierungen jedoch weggelassen wurden.

Es ist eine Antriebswelle 12 gezeigt, die mit einem nicht näher dargestellten Roboterantrieb, insbesondere einen Servomotor verbunden ist, gegebenenfalls unter Zwischenschaltung eines Getriebes. Auf der Antriebswelle 12 ist ein Verbindungselement 14 angebracht, welches beispielsweise als aufgeschrumpfte Hülse mit der Antriebswelle 12 fest verbunden ist. Das Verbindungselement 14 selbst dient als Träger für eine Bremsscheibe 16 und ist dieser entsprechend verbunden. Die Bremsscheibe 16 weist auf ihren beiden in axialer Richtung der Antriebswelle 12 weisenden Oberflächen jeweils einen Bremsbelag 18 auf, der vom äußeren radialen Rand der Bremsscheibe 16 beginnend bis in den Nahbereich des Verbindungselementes 14, jeweils als ein ringförmiger Körper mit der Bremsscheibe 16 verbunden ist. Hierdurch ist die Fläche, auf der Bremskräfte von der Bremsvorrichtung 10 auf die Bremsscheibe übertragen werden, besonders groß und technisch günstig angelegt.

Zudem ist eine Rahmenvorrichtung 20 gezeigt, welche die auf die Bremsscheibe 16 zu übertragenden Bremskräfte in ein nicht näher dargestelltes Bremsgehäuse ableitet und zudem schwimmend gelagert ist, sodass eventuelle geometrische Verschiebungen der Rahmenvorrichtung 20 in Relation zur axialen Lage der Bremsscheibe 16 auf der Antriebswelle 12 besonders gut ausgeglichen werden.

Die Rahmenvorrichtung 20 weist eine Rahmenbasis 22 auf, die in wesentlichen eine ringförmige Gestalt aufweist, wobei durch das Ringloch die Antriebswelle 12 durchgeführt ist. Auf der zur Antriebswelle 12 in axialer Richtung weisenden Seite der Rahmenbasis 22 sind eine Anzahl von Stabelementen 24, beispielsweise sechs Stück, mit deren einem Ende verbunden, während deren jeweils anderes Ende der Stabelemente 24 mit einen Abdeckring 26 verbunden ist.

Die Rahmenbasis 22, die Stabelemente 24 zusammen mit dem Abdeckring 26 bilden derart eine Art Käfig, welchen die Bremsscheibe mit ihre Bremsbelegen 18 umschließt. Zwischen der Bremsscheibe 16 und der Rahmenbasis 22 ist ein Rahmenelement 28 angeordnet, welches ebenfalls scheibenförmig ist und neben einer zentralen Ausnehmung durch welche die Antriebswelle 12 durchgeführt ist, noch weitere Ausnehmungen aufweist, durch welche die Stabelemente 24 durchgeführt sind. Auf diese Weise entsteht eine Führung für das Rahmenelement 28, welche die Bewegung in axialer Richtung der Stabelemente 24 zulässt.

Die Rahmenbasis 22 weist in ihren radial äußeren Bereich weitere Ausnehmungen auf, die zum Abdeckring 26 weisen und in denen das eine Ende der Stabelemente 24 angeordnet ist. Jedes Stabelement 24 ist von einer Feder 30 umgriffen, welche als Druckfeder in Wendelform ausgestaltet ist. Die Federn 30 sind einerseits durch die Ausnehmungen 32 geführt, anderseits durch die Stabelemente 24 und dehnen, sich im wesentlichen nur in einer axialen Richtung aus, wobei deren Länge und Druckkraft so bemessen ist, dass das Rahmenelement 28 gegen die Bremsscheibe 16 beziehungsweise dem zum Rahmenelement 28 weisenden Bremsbelag 18 gedrückt wird.

Figur 1 zeigt also die Bremsvorrichtung 10 im Zustand "Bremse geschlossen", d.h. entsprechend der eingestellten Bremskräfte wird die Antriebswelle 12, auch bei aktiviertem Antrieb, sich nicht bewegen können. Die Bremsvorrichtung 10 wird in der Regel auslegungsgemäß größere Bremskräfte aufbringen als die maximalen Antriebskräfte, die durch die Antriebswelle 12 eingeleitet werden.

Die Rahmenbasis 22 weist noch zusätzliche Ausnehmung 34 auf, deren Öffnung wiederum zum Rahmenelement 28 weisen, wobei in dieser zusätzlichen Ausnehmung 34 Elektromagnete 36 angeordnet sind. Die Verschaltungen und Ansteuerung dieser Elektromagnete 36 ist in dieser Figur nicht gezeigt, da sie dem Fachmann allgemein bekannt sind. Sie sind jedoch so bemessen, dass im Aktivierungsfall das Rahmenelement 28, welches zweckmäßigerweise aus einem magnetischen Material gefertigt ist, durch die Magnetkräfte sowie gegen die Federkräfte der Federwendeln 30 angezogen wird, bis das Rahmenelement 28 die Rahmenbasis 22, als Anschlag, berührt.

Die Lage des Rahmenelements 28 in der Stellung, wie in der einzigen Figur gezeigt, soll als erste Stellung oder als Zustand "Bremse geschlossen" bezeichnet werden und im Aktivierungsfalle der Elektromagneten 36, also dann wenn das Rahmenelement 28 aufgrund der magnetischen Kräfte unmittelbar an der Rahmenbasis 22 anliegt als zweite Stellung des Rahmenelements 28 oder als Zustand "Bremse geöffnet" bezeichnet werden.

Mit der in der einzigen Figur gezeigten erfindungsgemäßen Bremsvorrichtung wird nachfolgend das erfindungsgemäße Verfahren zum Erkennen eines Bremsenzustandes der Bremsvorrichtung eines Roboterantriebes beschrieben werden.

Durch die Federkräfte der Federn 30 werden entsprechende Kräfte auf das Rahmenelement 28 aufgebracht, welches gegen den entsprechenden Bremsbelag 18 der Bremsscheibe 16 drückt. Die Kräfte bewirken, dass sich die Bremsvorrichtung in ihrer schwimmenden Aufhängung so bewegt, dass auch der Abdeckring 26 als Reditionslager letztlich gegen den anderen Bremsbelag 18 der Bremsscheibe 16 drückt, sodass die Bremsscheibe 16 zwischen dem Rahmenelement 28 und dem Abdeckring 26 fixiert ist. Derart werden die Bremskräfte in die Bremsscheibe 16 eingeleitet. Die Bremskräfte sind dabei so gemessen, dass die Antriebswelle 12 sich keinesfalls bewegt, also auch nicht in dem Fall, dass der Antriebsmotor zum Antrieb der Antriebswelle 12 eingeschaltet ist. Wird nun die Bremse gelöst, beispielsweise weil der Roboterantrieb freigegeben wird, werden die Elektromagneten 36 aktiviert, sodass sich ein elektromagnetisches Feld ausbildet, welches so bemessen ist, dass das Rahmenelement 28 auch entgegen der Federkräfte der Federn 30 zur Rahmenbasis 22 bewegt. Damit wird das Rahmenelement von der ersten Stellung in die zweite Stellung verbracht. Entsprechend ändert sich der Zustand der Bremsvorrichtung von "geschlossen" auf "geöffnet".

Es sind auch ohne weiteres eine Bremskonstruktionen denkbar, die durch die Aktivierung des Elektromagneten 36 vom geöffneten in den geschlossenen Zustand übergehen. Bevorzugt ist jedoch die erstgenannte Austaltung, da dies einem Fail-Save-Prinzip der sicheren Konstruktion entspricht, also inbesondere bei einem Ausfall von Strom die Bremse in den sicheren geschlossenen Zustand überführt, so dass sich der Roboter keinesfalls mehr bewegt.

Der Abstand des Rahmenelements 28 in seinen Positionen zwischen seiner ersten und seiner zweiten Stellung sind insbesondere abhängig von der axialen Dicke der Bremsscheibe 16 sowie den beiden Bremsbelägen 18. So passiert es benutzungsbedingt, dass sich die Bremsbeläge 18 im Laufe der Betriebszeit verschleißen, wodurch deren Dicke, abnimmt und sich der Abstand zwischen den Abdeckring 26 und dem Rahmenelement 28 verringert. Entsprechend erhöht sich ein maximaler Abstand 38 zwischen den Rahmenelement 28 und der Rahmenbasis 22. Auf diese Weise ist auch der Abstand zwischen den Elektromagneten 36 und dem Rahmenelement 28 erhöht. Entsprechend dieses geänderten Abstands wird ein größeres Magnetfeld, somit eine größere Stromstärke durch die Elektromagneten 36 notwendig sein, um dass Rahmenelement 28 von seiner ersten Stellung in die zweite Stellung zu verbringen.

In der gezeigten Ausgestaltung des Erfindungsgegenstandes wird die Stromstärke als Messsignal herangezogen, mit dem der Abstand zwischen den Rahmenelement 28 und der Rahmenbasis 22 bestimmt wird.

Auf diese Weise lassen sich in besonders einfacher Art die Größe des Abnutzungsgrades der Bremsbeläge 16 Erkennen, also beispielsweise auch die Grenze einer bestimmten zulässigen Verringerung der Bremsbelagdicke. Entsprechend ist bei einer zu hohen grenzwertüberschreitenden gemessenen Stromstärken der Abstand zwischen der ersten und der zweiten Stellung des Rahmenelements 28 entsprechend vergrößert und im Umkehrschluss die Bremsbelagdicke so verringert, dass ein ordnungsgemäßer Zustand der Bremsvorrichtung nicht mehr besteht. Diese Überschreitungen werden an ein in der Figur nicht dargestelltes Auswertesystem übermittelt, das dann eine entsprechende Steuerungshandlung oder ein Steuerungssignal ausgibt, das beispielsweise befiehlt, dass der Roboter abgestellt wird.

Das Signal der Stromstärke wird aber auch ganz allgemein zur Bestimmung der Bremsbelagdicke herangezogen, also nicht nur der Bestimmung eines unzulässigen Bremsenzustandes der Bremse, sondern auch zur Bestimmung jeden Bremsenzustandes, der einen bestimmten Grad der Abnutzung der Bremse beziehungsweise der Bremsbeläge darstellt.

Eine aus statistischen Gründen vorteilhafte Methode die Verschleißgrenze oder den Bremsenzustand festzustellen ist es, den Stromstärkenverlauf insgesamt als Messsignal heranzuziehen und so aufgrund der breiteren Datenbasis beim Vergleich des Messsignals mit einem Referenzwert oder mit Referenzwerten den Bremsenzustand zu bestimmen.

Die Signalauswertung und die Feststellung des Bremsenzustandes werden besonders vorteilhaft in der Robotersteuerung selbst ausgeführt. Der zu betreibende Geräteaufwand ist entsprechend minimiert.

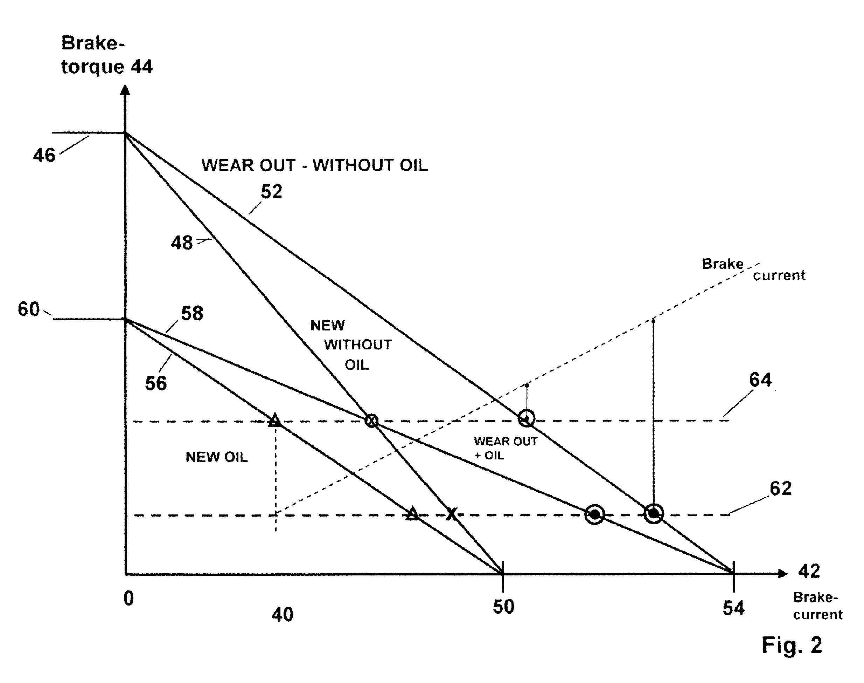

Figur 2 zeigt eine Graphik 40 mit Messwertbeispielen, anhand derer die Leistungsfähigkeit des erfindungsgemäßen Verfahrens gezeigt werden sollen. Hierzu ist auf einer X-Achse 42 eine Stromstärke aufgetragen, die den Elektromagneten 36 zum Aufbau eines elektromagnetischen Feldes zugeführt wird. Auf einer Y-Achse 44 ist ein Bremsmoment aufgetragen, welches von der Bremsvorrichtung 10 auf die Antriebswelle 12 aufgebracht wird und beispielsweise durch eine entsprechende Messvorrichtung gemessen wird.

In einem ersten Fall ist zunächst ein Beispiel für eine Bremse in einem ordnungsgemäßen Zustand gezeigt, wobei die Bremse Ihre höchste Bremskraft in einem ersten Punkt 46 aufweist, bei dem die Elektromagneten nicht stromdurchflossen sind. Im Fall einer neuen Bremse, die entsprechende Bremsbeläge 18 mit einer maximalen Dicke aufweisen, ist eine erste Kurve 48 gezeigt, die darstellt, dass mit steigender Stromstärke die Bremskräfte nach und nach geringer werden, bis sie in einem zweiten Punkt 50 vollständig verschwunden sind, so dass dieser Zustand als Bremse vollständig geöffnet bezeichnet wird. Die erste Kurve 48 ist eine Grade, da die Bremsmomente linear von der Stromstärke abhängen.

Eine entsprechend flachere Kurve ausgehend vom selben ersten Punkt 46 ist in der zweiten Kurve 52 dargestellt, die einen Zustand der Bremsvorrichtung 10 zeigt, dem die Bremsbeläge 18 bereits teilweise verschließen sind. Entsprechend größere Stromstärken müssen aufgewendet werden, um die Bremsvorrichtung 10 in den Zustand "vollständig geöffnet" zu überführen, was durch den entsprechend weiter rechts in der Figur gelegenen dritten Punkt 54 gezeigt ist.

Zwei weitere Kurven, nämlich eine dritte Kurve 56 sowie eine vierte Kurve 58 zeigen wiederum die Bremsvorrichtung 10 mit neuen und gebrauchten Bremsbelägen 18. Dabei ergehen die Kurven jedoch von einem vierten Punkt als Startpunkt aus, der auf der Y-Achse 44 liegt und einen geringeren Bremsmoment aufweist, als der Startpunkt der ersten 48 und zweiten Kurve 52 im ersten Punkt 46. Da es sich um dieselbe Bremsvorrichtung 10 handelt, liegt die Erklärung der geringeren Bremsmomente darin, dass eine Ursache vorliegt, welche die Bremsleistung, und damit das maximale Bremsmoment ungünstig beeinflussen. Im gewählten Beispiel ist das Öl, welches den Reibungskoeffizienten zwischen den Bremsbeläge und der Rahmenvorrichtung 20 beziehungsweise dem Rahmenelement 28 verringert. Das Beispiel ist dabei so gewählt, dass die Endpunkte der dritten Kurve 46 im zweiten Punkte 50 sowie der Endpunkt der vierten Kurve 58 im dritten Punkt 54 liegen.

Gezeigt sind noch zwei gestrichelte Linien, eine erste Linie 62 sowie eine zweite Linie 64, die waagerecht zur X-Achse 42 bei zwei Y-Werten, möglich bei einen geringeren Y-Wert und eines höheren Y-Wert, angeordnet sind. Die Y-Werte sind dabei im Wesentlichen willkürlich gewählt und sollen lediglich zeigen, dass zur Bestimmung der Steigung der entsprechenden Graden lediglich zwei Punkte notwendig sind, die durch entsprechende Zeichen der für die Schnittpunkte der Kurven 48, 52, 58, 56 mit den Linien 62, 64 benötigt werden um die Lage der Grade zu bestimmen im Diagrammpunkt sind. Die Lage der Grade respektive ihre Steigung bekannt, kann aufgrund des bekannten Bremsverhaltens der Bremse unter verschiedenen Einflüssen zum einen der Bremsenzustand der Bremse selbst ermittelt werden, wie die beiden Kurvenpaare 48, 52 sowie 56, 58 zeigen. Zum anderen ist aus Ermittlung der Ausgangspunkt, also der maximalen Bremsmomente, symbolisiert durch den ersten Punkt 46 und den vierten Punkt 60, möglich, weitere Einflussfaktoren, die die Bremsleistung oder das Bremsmoment verringern zu bestimmen.

Es hat sich herausgestellt, dass folgender Verfahrensablauf des erfindungsgemäßen Verfahrens zu besonders guten Ergebnissen führt, wenn eine elektromagnetisch arbeitende Haltevorrichtung bei der Bremsvorrichtung verwendet wird und folgende Verfahrensschritte ausgeführt werden:
Zunächst wird die Bremse betätigt, so dass die Achse des Motors festgehalten wird. Dann wird das Antriebsmoment auf einen ersten, zuvor festgelegten Wert gebracht. Eine Steuerungsvorrichtung beginnt nun die Stromstärke und/oder die Spannung der Haltevorrichtung der Bremse zu erhöhen. Damit wird das Bremsmoment entsprechend verringert. Sobald sich die Achse des Motors bewegt, ist der erste Messpunkt erreicht und der entsprechende Wert für die Stromstärke und ggf. die Spannung werden gespeichert, z.B. in der Steuerungsvorrichtung.
Mit einer entsprechenden Vorgehensweise wird ein zweiter Wert für die Stromstärke und ggf. Spannung ermittelt und gespeichert, so dass nunmehr zwei Punkte, durch welche die Gerade gemäß Fig. 2 bestimmt wird, gemessen sind. Der Unterschied zur ersten Messung liegt also in einem unterschiedlich gewählten Antriebsmoment, durch den sich Motor der bei einem anderen Grenz-Bremsmoment als bei der ersten Messung zu drehen beginnt.

### Bezugszeichenliste

- 10: Bremsvorrichtung
- 12: Antriebswelle
- 14: Verbindungselement
- 16: Bremsscheibe
- 18: Bremsbelag
- 20: Rahmenvorrichtung
- 22: Rahmenbasis
- 24: Stabelemente
- 26: Abdeckring
- 28: Rahmenelement
- 30: Feder
- 32: Ausnehmung
- 34: Ausnehmung
- 36: Elektromagnete
- 38: Abstand
- 40: Graphik
- 42: X-Achse
- 44: Y-Achse
- 46: erster Punkt
- 48: erste Kurve
- 50: zweiter Punkt
- 52: zweite Kurve
- 54: dritter Punkt
- 56: dritte Kurve
- 58: vierte Kurve
- 60: vierter Punkt
- 62: erste Linie
- 64: zweite Linie

## Patentansprüche

1. Verfahren zum Erkennen eines Bremsenzustandes einer Bremsvorrichtung eines Roboterantriebes mit einer Rahmenvorrichtung, die durch ein erstes bewegliches Rahmenelement im Bedarfsfall Bremskräfte auf ein rotierendes Bauteil des Roboterantriebes aufbringt, wobei die Bremsvorrichtung in wenigstens zwei Betriebszustände, wobei während des Überganges der Bremsvorrichtung vom einen in den anderen Zustand wenigstens ein Messsignal aufgenommen wird, und wobei durch einen Vergleich des wenigstens einen Messsignals mit zuvor festgelegten Referenzwerten ein Bremsenzustand ermittelt wird.

2. Verfahren nach Anspruch 1, **dadurch gekennzeichnet, dass** das erste Rahmenelement von einer ersten Stellung in eine zweite Stellung verbracht wird.

3. Verfahren nach Anspruch 1 oder 2, **dadurch gekennzeichnet, dass** als die erste Stellung der geschlossene Zustand der Bremse und als die zweite Stellung der geöffnet Zustand der Bremse gewählt wird.

4. Verfahren nach einem der vorgenannten Ansprüche, **dadurch gekennzeichnet, dass** das erste Rahmenelement mit wenigstens einer elektromagnetisch wirkenden Haltevorrichtung von der ersten in die zweite Stellung verbracht wird.

5. Verfahren nach Anspruch 4, **dadurch gekennzeichnet, dass** das erste Rahmenelement im deaktivierten Zustand der Haltevorrichtung durch eine Rückstellvorrichtung in eine der Stellungen verbracht wird.

6. Verfahren nach Anspruch 5, **dadurch gekennzeichnet, dass** das erste Rahmenelement durch eine Rückstellvorrichtung in eine Fail-Safe Stellung verbracht wird.

7. Verfahren nach einem der vorgenannten Ansprüche, **dadurch gekennzeichnet, dass** mit dem wenigstens einen Messsignal der Abstand des ersten Rahmenelementes von der ersten Stellung zur zweiten Stellung bestimmt wird.

8. Verfahren nach einem der Ansprüche 4 bis 7, **dadurch gekennzeichnet, dass** als Messsignal die notwendige Stromstärke oder der Stromstärkenverlauf die Haltevorrichtung zum Verbringen des ersten Rahmenelementes von der ersten in die zweite Stellung verwendet wird.

9. Verfahren nach einem der Ansprüche 1 bis 6, **dadurch gekennzeichnet, dass** als Messsignale Bremstorsionswerte verwendet werden, die bei wenigstens zwei verschiedenen Stromstärken oder einem Stromstärkenverlauf oder anderer kraftäquivalenter Vorgabewerte zum Verbringen des ersten Rahmenelementes von der ersten in die zweite Stellung gemessen werden.

10. Verfahren nach Anspruch 9, **dadurch gekennzeichnet, dass** eine erste Messung von Bremstorsionswerten im Bereich von 5% bis 30% einer maximalen Stromstärke oder anderer kraftäquivalenter Vorgabewerte zum Verbringen des ersten Rahmenelementes von der ersten in die zweite Stellung durchgeführt wird.

11. Verfahren nach Anspruch 9 oder 10, **dadurch gekennzeichnet, dass** eine zweite Messung von Bremstorsionswerten im Bereich von 70% bis 95% einer maximalen Stromstärke oder anderer kraftäquivalenter Vorgabewerte zum Verbringen des ersten Rahmenelementes von der ersten in die zweite Stellung durchgeführt wird.

12. Verfahren nach einem der Ansprüche 9 bis 11, **dadurch gekennzeichnet, dass** durch die Referenzwerte die bereits geleisteten Betriebsstunden der Bremsvorrichtung berücksichtigt werden.

13. Verfahren nach einem der Ansprüche 9 bis 12, **dadurch gekennzeichnet, dass** durch die Referenzwerte weitere Ursachen, welche die Bremsleistung der Bremsvorrichtung beeinflussen, insbesondere Öl im Bereich der Rahmenvorrichtung oder des ersten Rahmenelementes, detektiert werden.

14. Verfahren nach einem der vorgenannten Ansprüche, **dadurch gekennzeichnet, dass** die Messsignalaufnahme und / oder der Vergleich durch eine Robotersteuerung durchgeführt wird.

15. Bremsvorrichtung für einen Roboterantrieb mit einer Antriebswelle, auf der ein Bremselement angeordnet ist, mit einer Rahmenvorrichtung, mit der im Bedarfsfalle Bremskräfte auf das Bremselement aufbringbar sind, wobei die Rahmenvorrichtung ein erstes Rahmenelement aufweist, das in eine erste und eine zweite Stellung verbringbar ist, wobei eine der Stellungen dem Zustand Bremse geöffnet und die andere Stellung dem Zustand Bremse geschlossen entspricht, **dadurch gekennzeichnet, dass** mit einer Messvorrichtung wenigstens ein Messsignal für den Abstand des ersten Rahmenelementes zwischen seinen Stellungen aufnehmbar ist, und dass durch eine Auswertevorrichtung ein Bremsenzustand durch Vergleich des Messsignals mit einem Referenzwert ermittelt ist.

16. Bremsvorrichtung nach Anspruch 15, **dadurch gekennzeichnet, dass** Bremselement eine Bremsscheibe mit oder ohne Bremsbeläge ist.

17. Bremsvorrichtung nach Anspruch 15 oder 16, **dadurch gekennzeichnet, dass** das erste Rahmenelement durch eine elektromagnetisch wirkenden Haltevorrichtung von der ersten in die zweite Stellung verbringbar ist.

18. Bremsvorrichtung nach Anspruch 17, **dadurch gekennzeichnet, dass** das Messsignal die notwendige Stromstärke oder der Stromstärkenverlauf der Haltevorrichtung ist.

19. Bremsvorrichtung nach Anspruch 17, **dadurch gekennzeichnet, dass** das wenigstens eine Messsignal durch einen Abstandssensor messbar ist.

20. Bremsvorrichtung nach einem der Ansprüche 17 bis 19, **dadurch gekennzeichnet, dass** die Haltevorrichtung auch die Messvorrichtung ist.

21. Bremsvorrichtung nach einem der vorgenannten Ansprüche 15 bis 20, **dadurch gekennzeichnet, dass** das erste Rahmenelement durch eine Rückstellvorrichtung in der ersten Stellung verbringbar oder gehalten ist.
